Europäisches Patentamt

(19) European Patent Office

Office européen des brevets

(11) Publication number : **0 035 870 B2**

(12) # NEW EUROPEAN PATENT SPECIFICATION

(45) Date of publication of the new patent
specification : **27.12.91 Bulletin 91/52**

(21) Application number : **81300904.0**

(22) Date of filing : **04.03.81**

(51) Int. Cl.⁵ : **G11B 5/84**

(54) **Method of producing a magnetic recording medium.**

The file contains technical information
submitted after the application was filed and
not included in this specification

(30) Priority : **07.03.80 JP 29616/80**
**14.04.80 JP 49374/80**
**11.06.80 JP 79548/80**

(43) Date of publication of application :
**16.09.81 Bulletin 81/37**

(45) Publication of the grant of the patent :
**05.02.86 Bulletin 86/06**

(45) Mention of the opposition decision :
**27.12.91 Bulletin 91/52**

(84) Designated Contracting States :
**DE FR GB**

(56) References cited :
**DE-A- 2 347 540**
**DE-A- 2 622 597**

(56) References cited :
**DE-A- 2 758 772**
**DE-B- 2 547 552**
**FR-A- 2 376 485**
**US-A- 3 962 988**
**IEEE transactions on magnetics Vol.Mag.14
No.5.9.78 p. 849-851**
**J.Vac.Science Technol.Vol.9, No.6,p.1385-1388**

(73) Proprietor : **MATSUSHITA ELECTRIC
INDUSTRIAL CO., LTD.**
**1006, Oaza Kadoma**
**Kadoma-shi, Osaka-fu, 571 (JP)**

(72) Inventor : **Sugita, Ryuji**
**8-7 Oguracho Hirakata-shi**
**Osaka-fu (JP)**
Inventor : **Kunieda, Toshiaki**
**2-10, Hyakurakusou 4-chome**
**Minoo-shi Osaka-fu (JP)**

(74) Representative : **Spencer, Graham Easdale et
al**
**A.A. Thornton & CO Northumberland House
303-306, High Holborn
London WC1V 7LE (GB)**

EP 0 035 870 B2

## Description

## Background of the Invention

This invention relates to a method of producing magnetic recording media, and suited for the deposition of a magnetic material with its direction of easy magnetization oriented in a direction substantially perpendicular to the film plane.

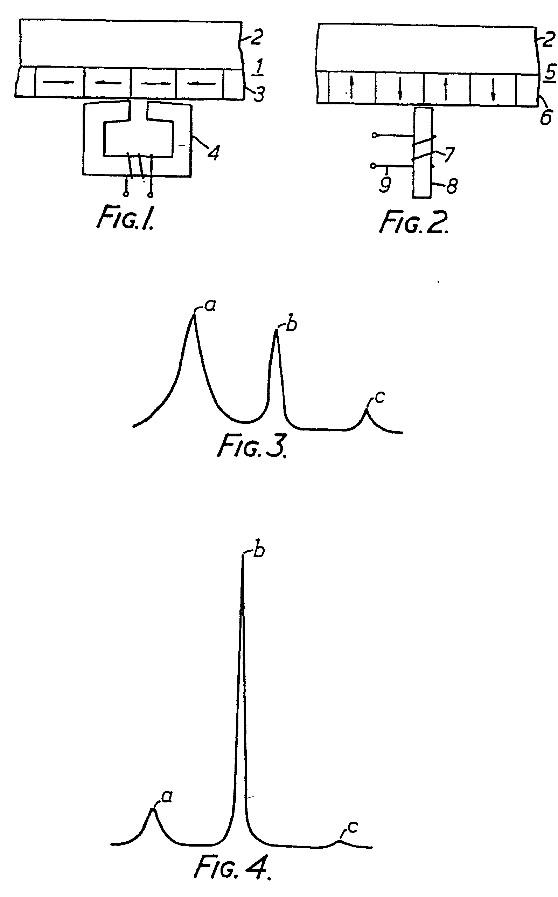

Referring to Fig. 1 which shows a conventional magnetic recording system, a recording medium 1 consists of a base film 2 and a magnetic layer 3 formed thereon and the direction of easy magnetization of the magnetic layer 3 is horizontal with respect to the film plane (as indicated by the arrow-marks). Accordingly, a recording head 4 associated therewith is constructed and disposed in such a manner that, in recording, it applies a magnetic field with the direction of easy magnetization horizontal with respect to the film plane.

Since the direction of residual magnetization is horizontal to the film plane in the above system, the demagnetizing field in the recording medium is increased as the recording signal is of short wavelength, with the result that the reproduction output is considerably reduced.

In contact, the short wavelength recording characteristics are remarkably improved in a recording system where the residual magnetization is perpendicular with respect to the film plane of the medium. Such a system will hereinafter be referred to as a perpendicular recording system. Referring to Fig. 2 which illustrates a perpendicular recording system in schematic representation, a recording medium 5 (hereinafter referred to as a perpendicular recording medium) consists of a base film 2 and a magnetic layer 6 which is a magnetic thin film (hereinafter referred to as a perpendicular recording layer) having a direction of each magnetization perpendicular (indicated by arrow marks) to the film plane. A recording head 7, used in association with the perpendicular recording medium, is a vertical-type head comprising a ferromagnetic thin film 8 and an excitation coil 9, which applied a magnetic field perpendicular to the film plane of the recording layer.

In the system described above, where the residual magnetization on recording is perpendicular to the film plane of the recording layer, the demagnetizing field of the recording medium decreases as the signal becomes shorter in wavelength so that a desirable reproduction output is ensured.

A method of producing a perpendicular magnetic recording medium is known in which a thin film composed predominantly of cobalt and chromium is deposited on a substrate by RF sputtering; see, for example, IEEE Transaction on Magnetics, Vol. Mag 14, No. 5, September 1978, 5849—851. The rate of deposition must be kept relatively low (of the order of 10 Angstroms per second, or less), in order to ensure that the resulting perpendicular magnetic recording layer is satisfactory. This method accordingly does not permit the deposition of a perpendicular recording layer at high speed and low cost.

The substrate for a magnetic recording medium is generally a plastics film, such as a film of polyethylene terephthalate, which has poor heat resistance. Accordingly, the deposition of a magnetic recording layer thereon must be carried out under relatively mild temperature conditions in order to avoid thermally degrading, deforming or otherwise impairing the film substrate.

We have now found that a perpendicular magnetic recording layer can be deposited at a rate considerably higher than in the known RF sputtering method, under relatively mild temperature conditions, by the use of vacuum deposition under certain conditions. Specifically, the vacuum vapour deposition is carried out with the vicinity of the substrate at a positive potential relative either to a source of the material to be vaporised to form the recording layer, or to the vicinity of the just-mentioned source, such that atoms of vaporised film-forming material close to the substrate are in the discharge state.

Although high deposition rates depend on the use of vacuum deposition, it is not the case that vacuum vapour deposition under all conditions would yield a satisfactory perpendicular recording medium; it is of great importance in the method according to the present invention to employ conditions such that atoms of vaporised material close to the substrate area are in the discharge state.

This is, of course, to be distinguished from an ion-plating process, such as that disclosed in U.S. Patent 3962988, in which the substrate is at a negative potential with respect to the source of film-forming material, which does not result in the production of atoms of vaporised film forming material close to the substrate in the discharge state.

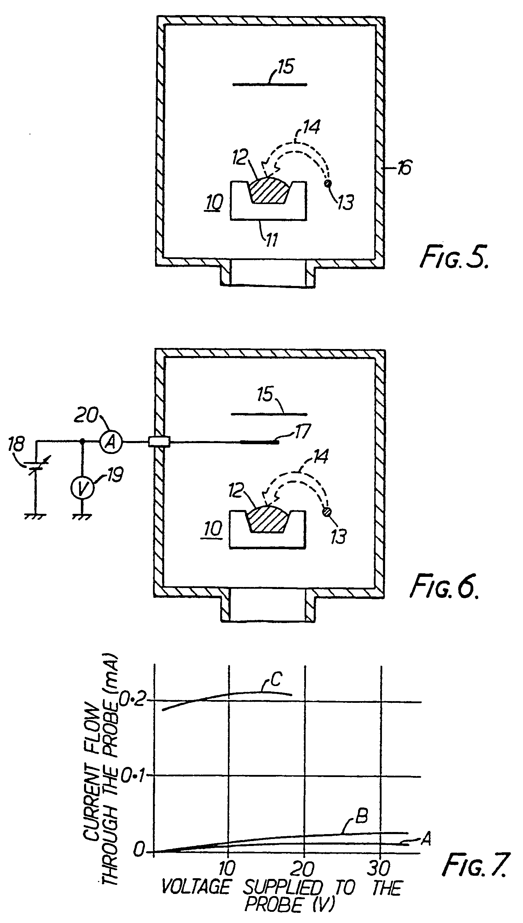

The X-ray diffraction patterns of Co-Cr thin films obtained by conventional vacuum vapour deposition at substrate temperatures of 20°C and 500°C are shown in Figs. 3 and 4, respectively. In both Figures, a, b and c represent reflections from the (101), (002) and (100) plane of the crystal lattice of hexagonal closest packing. As will be apparent from these graphs, the Co-Cr film obtained at a substrate temperature of 20°C (Fig. 3) is substantially randomly oriented but in the film obtained at 500°C (Fig. 4), the C-axes of unit cells are fairly oriented in the direction perpendicular to the film plane. However, only a limited variety of substrates (and no organic polymers) are resistant to temperatures as high as 500°C.

The dependency of the C-axial orientation of Co-Cr films produced by vacuum vapour deposition on the temperature of the substrate suggests that in order to promote a C-axial orientation, the mobility of atoms of the evaporated metal must be large on the substrate surface. This presumption is consistent with the hypothesis that the known sputtering technique yields a better orientation of C-axes because the bombarded atoms have a kinetic energy about 10 times as large as the atoms liberated by vacuum vapour evaporation and, therefore, a greater mobility of atoms on the substrate surface. This invention is contained in claim 1.

Thus, in the method according to the invention, enhanced mobility of activated atoms on a substrate surface in a vacuum vapour deposition process is ensured by providing conditions such that film-forming material close to the substrate are in the discharge state. When vacuum vapour deposition was carried out according to the invention under such conditions, it was found that a satisfactory Co-Cr film having a direction of easy magnetization perpendicular to the film plane could be successfully produced.

Vacuum vapour deposition under conditions such that atoms of vaporised material close to the substrate are in the discharge state results in a hexagonal close packed lattice in the cobalt-chromium recording layer when the proportion of chromium is not more than about 30% by weight; the chromium content is generally 13 to 28% by weight. To ensure that the recording layer is a perpendicular recording layer, the C-axes of the unit cells constituting the close-packed lattice should be perpendicular to the film plane.

The production of the appropriate discharge state can be achieved in one of several ways. Preferred embodiments of the method according to the invention will now be described with reference to Figures 5 to 18 of the accompanying drawings (Figures 1 to 4 have been referred to above). In Figures 5 to 18:

Figure 5 is a schematic representation of apparatus used in a first embodiment of the method to provide a discharge state;

Figure 6 is a diagrammatic view showing a method of detecting the operational condition of the apparatus of Figure 5;

Figures 7 and 8 are graphs showing the operational conditions of the apparatus of Figure 5 as measured by the method illustrated in Figure 6;

Figure 9 is a sectional view showing an improved evaporation source;

Figures 10 and 11 are diagrammatic views showing the X-ray diffraction pattern and hysteresis curve of a magnetic recording medium produced in accordance with an embodiment of this invention;

Figure 12 is a schematic sectional view showing apparatus used in a second embodiment of this invention;

Figure 13 is a graphic representation showing the relation of the voltage applied to the base film and the current which flows in the base film in the method using the apparatus of Figure 12;

Figures 14 and 15 are each sectional views showing modifications of the apparatus of Figure 12;

Figure 16 is a schematic sectional view showing apparatus used in a third embodiment of this invention; and

Figures 17 and 18 are each views showing modifications of the apparatus of Figure 16.

The method of Figures 5 to 11 involves the use of an electron beam heated evaporation source, using a high power electron gun, whereby a very stable discharge state can be realized by using an evaporation source on which the only external influence is that of the electron gun.

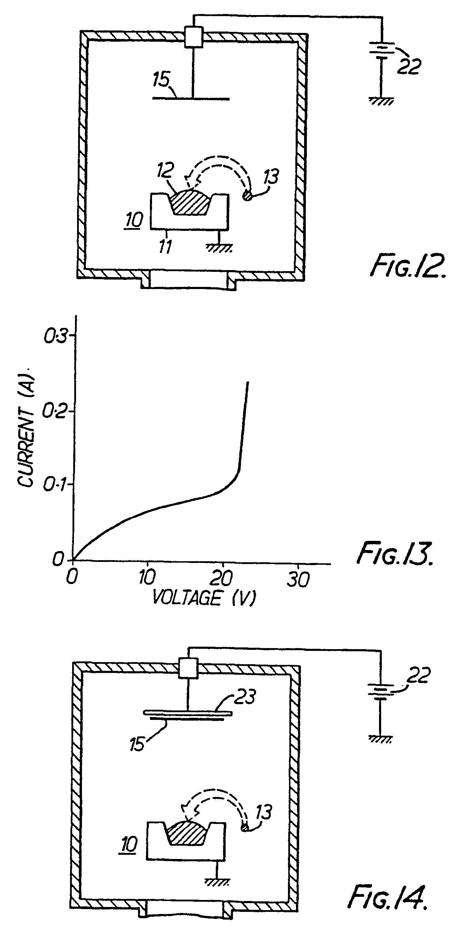

The method of Figures 12 to 15 employs an evaporation source associated with an electron gun as does the method of Figures 5 to 11 but, additionally, an electric potential is applied so that the substrate (or the vicinity of the substrate) is at a positive potential relative to the source of filmforming material.

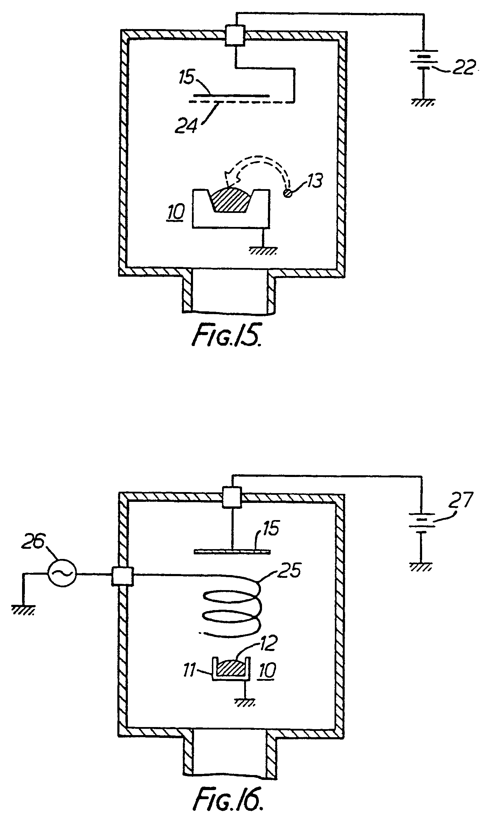

In the method of Figures 16 to 18, a high frequency electrode is disposed between the substrate and the source and a high frequency voltage is applied to the electrode, so that the substrate (or the vicinity of the substrate) is at a positive potential relative to the evaporation source.

Referring to Figure 5, an evaporation source 10 is a water-cooled copper hearth 11 holding a material 12 which is to be evaporated. In the vicinity of the hearth 11 is located an electron gun 13 which emits an electron beam towards the material 12 to heat and evaporate it. A substrate film 15 is located overhead of the evaporation source 10 so that a magnetic film is produced on said substrate 15; all of parts 10 to 15 are accommodated in a vacuum chamber 16.

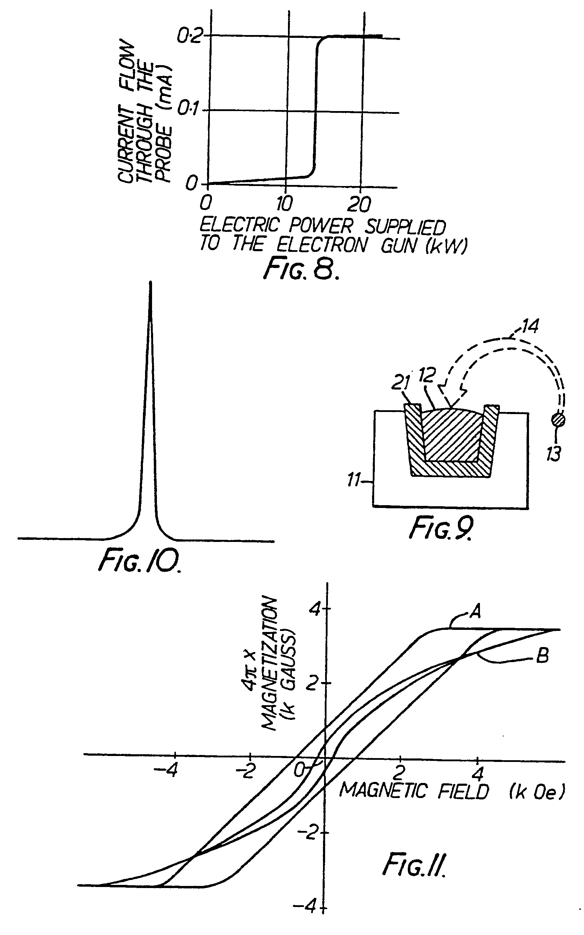

In the above arrangement, as the power supply to the electron gun 13 is increased to a sufficient extent, atoms of evaporated material are brought into the discharge state. Whether these atoms are in discharge state or not can be checked by disposing a probe 17 between the substrate 15 and the evaporation source 10, applying a voltage to the probe and measuring the current that flows in the probe as schematically illustrated in Figure 6. Figures 7 and 8 show the results of measurements made with a variable DC power source 18 as a voltage source, a DC voltmeter 19 and a DC ammeter 20. Figure 7 is a graph showing the relation of the voltage applied to the probe 17 with the current that flows. The curves A, B and C represent the cases in which the powers supplied to the electron gun were 5 kW, 10 kW and 16 kW, respectively. Figure 8 is a graph showing the relation of the power supplied to the electron gun 13 with the current that flows in the probe 17, the voltage applied to the probe being 5 V. The degree of vacuum was $5 \times 10^{-5}$ Torr, and the power to the gun was regulated by varying the current while the voltage was kept constant at 10 kW. It will be seen from these graphs that when the power supplied to the electron gun exceeded 14 kW, there was a sudden increase of current indicating the atoms of evaporated material have been brought into the discharge state.

It should be noted the conditions conductive to the discharge state of atoms vary according to such factors as the degree of vacuum and the structure of the evaporation source.

A stabler discharge state than that obtained according to Figure 5 can be established by adopting an evaporation source structure like the one shown in Figure 9, in which a crucible 21 made of a heat-resistant insulation material such as magnesia or zirconia is positioned in a water-cooled copper hearth 11 and the material to be evaporated is held in the crucible 21. In this arrangement, the only external influence on the material to be evaporated is the electron gun 13. With this particular evaporation source, a stable discharge state could be established even at a low power supply of 3 kW under otherwise the same conditions as those mentioned with reference to Figure 5.

Figures 10 and 11 show the characteristics of a Co-Cr film produced by means of the evaporation source of Figure 9 under conditions ensuring the discharge state. The degree of vacuum was $5 \times 10^{-5}$ Torr, the substrate was a heat-resistant high polymer base sheet and the substrate was at atmospheric temperature. The distance from the substrate to the evaporation source was 20 cm and the power supplied to the electron gun was 3.5 kW (10 kV, 0.35 A). The rate of formation of the thin film was about 2000 Å/second, and the composition of the film was 18 weight percent of Cr.

The peak in the X-ray diffraction pattern of Figure 10 represents reflections from the (002) plane, indicating that C-axes are oriented perpendicularly with respect to the film plane.

In Figure 11, Curve A is a hysteresis curve which was obtained with a magnetic field applied in a direction perpendicular to the plane of the Co-Cr film and B is a hysteresis curve in the plane direction of the film. As to Curve A, no correction was made for demagnetizing field. These hysteresis curves show that the direction of easy magnetization coincides with the direction perpendicular to the film plane.

In contrast, when the power supply to the electron gun was set at 2.5 kW (10 kV, 0.25 A) and vacuum deposition was carried out under otherwise the same conditions as above, which conditions did not result in the discharge state, the resulting Co-Cr film was substantially non-oriented and gave an X-ray pattern like that shown in Figure 3.

It should be understood that in the case of a binary vacuum deposition process where Co and Cr are evaporated from independent evaporation sources, both of the sources may be associated with electron guns, but a perpendicular magnetic film can also be obtained if an electron gun is used for the Co source and a resistance or high frequency heating setup is used for the Cr source providing that the gun for the Co source is supplied with a sufficiently larger power to ensure that the discharge state is produced.

Referring to Figure 12, this method is similar to that depicted in Figure 5 except that a voltage is applied from a DC power source 22 to the substrate 15 so that the substrate will have a positive potential with respect to the evaporation source. The difference between these methods is that whereas in the first method, atoms of the evaporated material are brought into the discharge state by controlling the power supply to the electron gun 13, in the second method the atoms are brought into the discharge state by controlling the voltage applied to the substrate 15.

Figure 13 shows the relation of the voltage applied to the substrate with the current in the substrate when the power supply to the electron gun is 2 kW. It is seen that as the voltage is increased to more than 21 V, there occurs a sharp increase of current, indicating that atoms of the evaporated material have been brought into the discharge state. Thus the power supply to the electron gun may be smaller than that required for the method of Figure 8. A perpendicular Co-Cr film obtained by the method of Figure 12 can have desirable characteristics as shown in Figures 10 and 11.

It should be pointed out that if a negative potential, with respect to the evaporation source, is imparted to the substrate, the process is equivalent to the process known as electrodeposition or DC ion plating. In the resulting film, the C-axes of unit cells are more or less oriented in a direction perpendicular to the film plane, but the degree of orientation is not sufficiently high to produce the perpendicular magnetic layer, with the direction of easy magnetization of the layer lying within the film plane.

In a binary vacuum deposition method where Co and Cr are evaporated from independent evaporation sources the method according to the invention can also be carried out using an electron gun heating setup only for the Co source as mentioned with reference to Figures 5 to 11.

Figure 14 shows a modification of the arrangement of Figure 12 in which a positive potential is imparted to a metal plate 23 located behind the substrate 15;

Figure 15 shows an arrangement in which a positive potential is applied to a metal wire-mesh screen 24 disposed in front of the substrate 15 as shown in Figure 15.

Referring to Figures 16 to 18, the method can be considered as an improvement over the high frequency ion plating process. In the high frequency ion plating process, atoms of evaporated material have a high mobility on the substrate surface but the Co-Cr film produced by the technique is not suitable as a perpendicular magnetic layer as achieved according to the invention.

In Figure 16, an evaporation source 10, a base plate 15 and a vacuum chamber 16 are similar to those described previously. Additionally, a high frequency electrode 25 is disposed between the evaporation source 10 and the substrate 15, and a high frequency electric field is applied by a high frequency power source 26. From a DC power source 27, a DC voltage is applied to the substrate 15 to establish a positive potential with respect to the evaporation source 15. Except that the substrate 15 has a positive potential with respect to the evaporation source 15, the arrangement is similar to that for ordinary high frequency ion plating. Atoms of evaporated material are ionized or excited by the high frequency electric field applied by the high frequency electrode.

By practising this method with a substrate temperature of 100°C or less, there was obtained a Co-Cr film having characteristics similar to those shown in Figures 10 and 11. The degree of orientation of C-axes showed a decreasing tendency at substrate temperatures over 100°C.

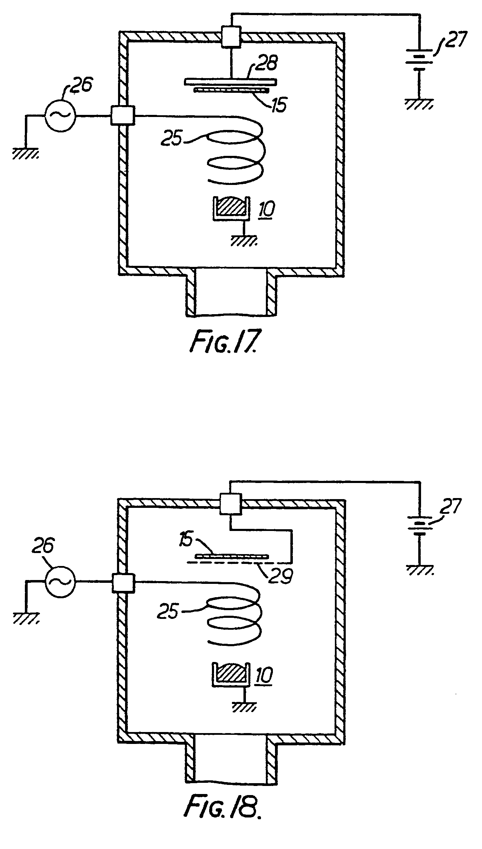

Similar results were obtained when, instead of applying a voltage directly to the substrate 15, a voltage is applied to a metal electrode 28 disposed behind the substrate 15 as illustrated in Figure 17 or a metal wire-mesh screen 29 disposed in front of the substrate 15 as illustrated in Figure 18.

According to the invention, a perpendicular magnetic recording layer can be produced at a very high rate (several thousands Å per second) which is remarkably faster than several Å per second achieved by sputtering. Furthermore, because the temperature of the substrate may be as low as room temperature, the method according to the invention is suitable for use with polymer substrates, as conventionally used for magnetic tapes.

## Claims

1. A method of producing a perpendicular magnetic recording medium in which a thin film composed predominantly of cobalt and chromium is formed on a substrate, with chromium present in the proportion between 13 and 30 per cent by weight, characterised in that said film is formed by vacuum vapour deposition and a voltage is applied to the substrate or an electrode in the vicinity of the substrate to create a positive potential in the vicinity of said substrate relative to the source of the film-forming material such that atoms of vaporized film-forming material close to the substrate are in the discharge state.

2. A method according to claim 1, in which the film-forming material is caused to evaporate by means of an electron gun having a sufficiently high electric power supply that said atoms are in said discharge state.

3. A method according to claim 2, in which the source of film-forming material is insulated from environmental influences other than the electron gun.

4. A method according to claim 1, in which the film-forming material is caused to evaporate by means of an electron gun and the positive potential is applied by means of external circuit connection (Fig. 12, 14, 15).

5. A method according to claim 1, in which evaporated film-forming material is ionized by means of a high frequency voltage applied using an electrode positioned between the source and the substrate and the positive potential is applied by means of external circuit connection (Fig. 16-18).

## Patentansprüche

1. Verfahren zum erzeugen eines magnetischen Aufzeichnungsmediums für senkrechte Magnetisierung, bei dem ein dünner Film, der hauptsächlich aus Kobalt und Chrom besteht, auf einem Substrat ausgebildet wird, wobei Chrom mit einem Anteil zwischen 13 und 30 Gew. -% vorhanden ist, **dadurch gekennzeichnet,** daß der Film durch Aufdampfung im Vakuum oder eine in der Nähe desselben gelegene Elektrode angelegt wird, um ein positives Potential in der Nähe des Substrats relativ zur Quelle des filmbildenden Materials zu erzeugen, damit Atom des verdampften filmbildenden Materials nahe dem Substrat im Entladezustand sind.

2. Verfahren nach Anspruch 1, bei dem das filmbildende Material mit Hilfe einer Elektronenkanone zur Verdampfung gebracht wird, die ausreichend hoch mit elektrischer Energie versorgt wird, daß die Atome sich im genannten Entladezustand befinden.

3. Verfahren nach Anspruch 2, bei dem die Quelle des filmbildenden Materials gegenüber Umgebungseinflüssen mit Ausnahme der Elektronenkanone isoliert ist.

4. Verfahren nach Anspruch 1, bei dem das filmbildende Material mit Hilfe einer Elektronenkanone verdampft wird und das positive Potential mittels einer äußeren Schaltkreisverbindung zugeführt wird (Fig. 12, 14, 15).

5. Verfahren nach Anspruch 1, bei dem das verdampfte filmbildende Material mit Hilfe einer Hochfrequenzspannung ionisiert wird, die unter Verwendung einer Elektrode zugeführt wird, die zwischen der Quelle und dem Substrat angeordnet ist, und das positive Potential mit Hilfe einer äußeren Schaltkreisverbindung zugeführt wird (Fig. 16 bis 18).

## Revendications

1. Procédé de fabrication d'un support d'enregistrement magnétique perpendiculaire dans lequel une mince pellicule composée principalement de cobalt et de chrome est formée sur un substrat, le chrome étant présent en une proportion comprise entre 13 et 30 % en poids, caractérisé en ce que ladite pellicule est formée par dépôt de vapeur sous vide, et en ce qu'une tension est appliquée au substrat ou a une électrode au voisinage du substrat pour créer un potentiel positif au voisinage dudit substrat par rapport à la source de matière formant la pellicule, de sorte que les atomes de matière vaporisée formant la pellicule au voisinage du substrat se trouvent à l'état de décharge.

2. Procédé selon la revendication 1, dans lequel la matière formant la pellicule est évaporée au moyen d'un canon à électrons recevant une puissance électrique suffisamment élevée pour que lesdits atomes se trouvent à l'état de décharge.

3. Procédé selon la revendication 2, dans lequel la source de matière formant la pellicule est isolée des influences de l'environnement autres que celle du canon à électrons.

4. Procédé selon la revendication 1, dans lequel la matière formant la pellicule est évaporée au moyen d'un canon à électrons et le potentiel positif est appliqué au moyen d'une connexion de circuit extérieur (figures 12, 14, 15).

5. Procédé selon la revendication 1, dans lequel la matière évaporée formant la pellicule est ionisée au moyen d'une tension à haute fréquence appliquée en utilisant une électrode positionnée entre la source et le substrat, et le potentiel positif est appliqué au moyen d'une connexion de circuit extérieur (figures 16-18).

FIG.1.

FIG.2.

FIG.3.

FIG.4.

FIG. 5.

FIG. 6.

FIG. 7.

FIG. 8.

FIG. 9

FIG. 10.

FIG. 11.

FIG.12.

FIG.13.

FIG.14.

*Fig.15.*

*Fig.16.*

11

FIG. 17.

FIG. 18.